(19) Europäisches Patentamt
European Patent Office
Office européen des brevets

(11) EP 0 626 591 B1

## (12) EUROPEAN PATENT SPECIFICATION

(45) Date of publication and mention
of the grant of the patent:
**16.09.1998 Bulletin 1998/38**

(51) Int Cl.⁶: **G01T 1/17**

(21) Application number: **94200673.5**

(22) Date of filing: **16.03.1994**

(54) **Radiation analysis apparatus**

Strahlungsuntersuchungsgerät

Appareil d'analyse à rayonnement

(84) Designated Contracting States:
**CH DE FR GB LI NL**

(30) Priority: **24.03.1993 EP 93200850**

(43) Date of publication of application:
**30.11.1994 Bulletin 1994/48**

(73) Proprietor: **Koninklijke Philips Electronics N.V.
5621 BA Eindhoven (NL)**

(72) Inventors:
- **Bolk, Hendrik Johannes Jan
  NL-5656 AA Eindhoven (NL)**
- **Zieltjens, Georges Charles Petronella
  NL-5656 AA Eindhoven (NL)**

(74) Representative: **Schouten, Marcus Maria et al
INTERNATIONAAL OCTROOIBUREAU B.V.,
Prof. Holstlaan 6
5656 AA Eindhoven (NL)**

(56) References cited:
**EP-A- 0 288 116          US-A- 4 352 160**

- **NUCLEAR INSTRUMENTS AND METHODS,
  vol.205, no.1-2, 15 January 1983,
  NORTH-HOLAND, NL pages 167 - 171 CASOLI,P
  & MARANESI 'FUZZY COARSE CODING
  UP-GRADES A/D CONVERTERS FOR
  PULSE-HEIGHT ANALYSIS'**
- **SIEMENS FORSCHUNGSUND
  ENTWICKLUNGSBERICHTE, vol.3, no.6, 1974,
  WEST GERMANY pages 348 - 352 BAYATI,A
  'reducing differential non-linearity in
  analog-digital converters'**

# Description

The invention pertains to a radiation analysis apparatus according to the preamble of Claim 1.

A radiation analysis apparatus of said kind is known from the published European patent application EP-A-0 288 116.

The known radiation analysis apparatus is an X-ray spectrometer in which a sample to be examined is irradiated with X-ray radiation. X-ray quanta emitted by the sample are converted by a radiation detector into an analog detector signal in the form of detector pulses. Each of these detector pulses is converted into a bit word by an analog-to-digital converter which bit words constitute a digital signal representing the height of the detector pulses. The digital outputs of the analog-to-digital converter are coupled to an address bus of a storage device, thus generating addresses for the storage device. Each time a detector pulse is converted into a bit word the content of that address is increased by one incremental unit whereby a stored count for each channel is generated, thus providing a pulse-height distribution. Said pulse-height distribution formed in the storage device can be displayed on a cathode ray tube.

The analog-to-digital converter inevitably has to some extent differential non-linearities, giving rise to deviations of the ideal conversion of analog signals generated by the radiation detector. In the known radiation analysis apparatus errors arising by the differential non-linearities of the analog-to-digital converter are carried over into a pulse-height distribution that is displayed on the cathode-ray tube.

The problem of differential non-linearity per se is well known.

In US patent US 4,352,160 the differential linearity of an analog-to-digital convertor is measured by a statistical method in order to give any input voltage an equal chance of being sampled by the convertor. The number of times each possible each possible output code word occurs is a direct measure of differential non-linearity. This document contains no indication of solving the problem of the distortion of the pulse-height distribution.

In an article in NUCLEAR INSTRUMENTS AND METHODS, Vol.205, No.1-2, Jan.'83, pp.167-171 "Fuzzy coarse coding upgrades A/D-conversion for pulse-height analysis" an A/D-arrangement is disclosed in which the combination of two A/D-convertors and one D/A-convertor is used. The inherent differential non-linearities of these convertors are avoided by the combined actions of a sliding scale circuit and a so-called "shaker" circuit. The latter circuit subtracts a noisy waveform from the input signal of the first A/D-convertor, thus making the threshold values of the parallel comparators of that convertor to float thereby averaging the non-linearity errors within the dynamic range of the "shaking" noise. This document contains no indication of solving the problem of the distortion of the pulse-height distribution.

In an article entitled "Reducing Differential Non-Linearity in Analog-Digital Converters" in SIEMENS FORSCH.-U.ENTWICKL.BER., Vol.3, No.6, 1974, pp. 348-352 a method for avoiding non-linearities is disclosed by smoothing the transfer characteristic of an A/D-convertor. The smoothing is achieved by "wobbling", i.e. adding an analog value to the input value at the start of the encoding and subsequently subtracting that value from the digital result. The characteristic can thus be determined over n channels, provided that the figures 0 to n-1 recur with equal frequency. Also this document contains no indication of solving the problem of the distortion of the pulse-height distribution.

It is *inter alia* an object of the invention to provide a radiation analysis apparatus for producing a pulse-height distribution being corrected for errors induced by differential non-linearities of the analog-to-digital converter.

This object is achieved by the measures according to the characterizing portion of Claim 1.

When radiation is incident on the radiation detector an electronic detector signal is generated. Said detector signal is converted into a digital signal amplitude which is supplied to the memory means or storage device, so as to form counts in the storage device from a sequence of detector signals, said counts constituting a pulse-height distribution, i.e. the value of a count corresponds to the occurrence of signal amplitudes having values in a predetermined range. Errors induced in the pulse-height distribution by differential non-linearities depend only on the analog-to-digital converter employed and are notably independent of the intensities and energy distribution of the radiation detected by the x-ray detector. Therefore, when an ideal pulse-height distribution is known for any one known detector signal, values for correction numbers can be established by comparing the counts of the ideal pulse-height distribution to counts formed from the primary digital amplitude. The correction numbers are subsequently employed for correcting any pulse-height distribution formed from the detector signal by calculation of corrected counts constituting a corrected pulse height distribution.

A preferred embodiment of the radiation analysis apparatus in accordance with the invention is further characterised by Claim 2.

In the present embodiment of a radiation analysis apparatus in accordance with the invention a pulse-height distribution is formed from primary digital signal amplitudes by way of a storage device having the form of a multi-channel analyzer incorporating a multi-channel memory. A channel number of the multi-channel memory corresponds to a narrow range of values for digital signal amplitudes. Tendering one primary digital signal amplitude to the multi-channel analyzer has as an effect that a value of a count stored in a relevant channel of the multi-channel memory is increased by one unit; the relevant channel being in correspondence with the digital signal amplitude. Correspondingly, a channel number of the multi-channel memory corresponds to a narrow range of energies of radiation quanta detected by the radiation detector. Supplying a sequence of detector signals to the analog-to-digital converter causes formation of counts in the multi-channel memory. The pulse-height distribution so formed in the multi-channel memory comprises errors due to differential non-linearities of the analog-to-digital converter. By computation employing correction numbers, the counts from the multi-channel memory (being the contents of each of the channels) can be formed into corrected counts constituting a corrected pulse-height distribution not containing errors due to said differential non-linearities. The corrected pulse-height distribution is e.g. registered by a recording device or displayed by a display device.

The various functions which the radiation analysis apparatus according to the invention performs for carrying-out corrections for producing a pulse-height distribution being corrected for errors induced by differential non-linearities of the analog-to-digital converter are preferably performed by a suitably programmed computer coupled to said apparatus.

These and other aspects of the invention will become apparent from and elucidated with reference to the embodiments described hereinafter and with reference to the accompanying drawings.

Figure 1 shows an embodiment of a radiation analysis apparatus in accordance with the invention.

Figure 2 shows differential non-linearities of an analog-to-digital converter for use in a radiation analysis apparatus in accordance with the invention.

Figure 3a shows an example of a pulse-height distribution comprising deviations due to the differential non-linearities of an analog-to-digital converter shown in Figure 3, said pulse-height distribution pertaining to a detector signal having a Gaussian-shaped pulse-height distribution.

Figure 3b shows an example of a pulse-height distribution pertaining to the above detector signal from which deviations have due to differential non-linearities of an analog-to-digital converter shown in Figure 3 have been removed as produced by a radiation analysis apparatus according to the invention.

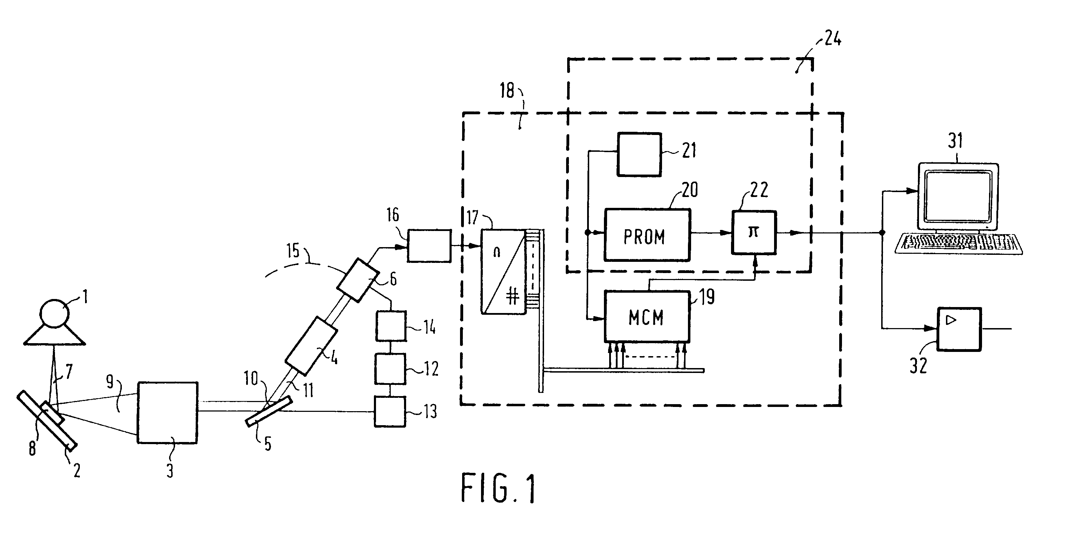

Figure 1 shows an embodiment of a radiation analysis apparatus in accordance with the invention. In fact, the radiation analysis apparatus as shown in Figure 1 is in particular an x-ray analysis apparatus.

The x-ray analysis apparatus shown in Figure 1 comprises an x-ray source 1, a sample holder 2, collimators 3 and 4, a analyzing crystal 5 and an x-ray detector 6. The x-ray detector 6 is for instance a gas ionisation detector. An x-ray beam 7 is incident on a sample 8 and causes x-ray fluorescence to be emitted by the sample. A fluorescence x-ray beam 9 is incident *via* the collimator 3 on a surface 10 of the analyzing crystal 5, after which a further x-ray beam 11 reflected according to Bragg reflection there from reaches the x-ray detector 6 *via* the collimator 4. By way of a drive motor 12 and a transmission gear 13 the analyzing crystal is at option rotated about an axis perpendicular to the plane of the drawing. By means of this rotation, the energy of the x-ray beam incident on the x-ray detector is selected within a narrow range. The motor 12, acting *via* a transmission gear 14, causes a rotation of the detector which matches the rotation of the crystal, likewise about a axis at right angles to the plane of the drawing. Due to this rotation, the detector is moved along an arc of a circle 15. The analog detector signal generated by the detector is controlled by a gain-control-circuit 16. Subsequently said detector signal is converted into a digital signal amplitude by a analog-to-digital converter 17. The signal amplitude of the detector signal generated by the detector is in correspondence with a energy of a x-ray photon incident on the detector. Thus, a distribution of occurrence of amplitudes of signals generated by the detector corresponds to a energy distribution of x-ray photons incident on the detector. Said occurrence distribution of amplitudes of signals will be referred to hereinafter as a pulse-height distribution, which is displayed on e.g. a cathode-ray tube of a monitor 31 in the form of a histogram. The analog detector signal generated by the radiation detector 6 is processed by detector reading circuit-means 18 that will be further discussed hereinafter.

For achieving high-speed operation of the detector reading circuit, the analog-to-digital converter 17 is a Flash-ADC. A storage circuit having the form of a multi-channel-memory 19, which is a part of a multi-channel-analyzer, is provided for converting detector signals generated by the detector into a pulse-height distribution. A channel number of the multi-channel memory corresponds to a narrow range of values for signal amplitudes of detector signal amplitudes generated by the detector; the width of said range being determined by the ratio of a predetermined width of a range of x-ray energies relevant for performing an x-ray analysis to a number of channels of the multi-channel memory. Supplying one digital signal to the multi-channel memory has as an effect that a value stored in a relevant channel of the multi-channel memory is increased by one unit, the relevant channel being in correspondence with the of the detector signal amplitude generated by the detector. Supplying a sequence of detector signals to the analog-to-digital converter causes formation of counts in the multi-channel memory. Correspondingly, a channel number of the multi-channel memory corresponds to a narrow range of values of energies of x-ray photons detected by the x-ray detector.

Because a Flash-ADC inevitably has to some extent differential non-linearities, perturbations are carried over into the pulse-height distribution as registered by the multi-channel-memory 19. Such perturbations entirely due to intrinsic differential non-linearities are corrected for in a radiation analysis apparatus in accordance with the invention. It is known *per se* from the US patent specification **US 4 352 160** that differential linearity, or complementary the extent of differential non-linearity, of an analog-to-digital converter can be measured by applying a known test pulse to the analog-to-digital converter. A seemingly method is employed in a radiation analysis apparatus in accordance with the invention, however for calibrating and subsequently correcting a pulse-height distribution registered by the multi-channel-memory, instead of for merely analyzing the analog-to-digital converter. For correcting, correction numbers are employed that are obtained by carrying-out a control-measurement of the Flash-ADC. Calibration of the detector reading circuit means can be carried out while the detector circuit reading means is either detached from or connected to the radiation analysis apparatus. Calibration is performed by tendering an analog control-measurement sawtooth-signal to the Flash-ADC, said control-measurement sawtooth signal being accurately linear in the range of the Flash-ADC and converting said analog saw-tooth signal into a digital control-measurement signal at a high clock frequency by the Flash-ADC. Specifically the sawtooth-signal is chosen such that the range of the Flash-ADC is amply comprised within the interval between a maximum signal amplitude and a minimum signal amplitude of the control-measurement sawtooth-signal. Therefore, when supplying the digital control-measurement signal to the multi-channel memory, a substantial number of counts are supplied to the underflow and to the overflow channels and counts corresponding to the intermediate range of the control-measurement sawtooth signal are supplied to intermediate channels wherein the pulse-height distribution is formed. As a consequence a portion of the control-measurement sawtooth signal having a accurate linearity is employed for calibration. Ideally, when supplying the control-measurement sawtooth signal to the Flash-ADC, equal numbers of counts are supplied to the intermediate channels of the multichannel-memory. For a 256-channel multi-channel memory, wherein the underflow channel is channel #0 and the overflow channel is channel #255, the ideal number of counts $N'_c$ is given by

$$N'_c = (1/254)\Sigma_{i=1}^{254}N_c(i),$$

where $N_c(i)$ is the number of counts obtained in channel #$i$ after supplying the digital control-measurement signal to the multi-channel memory means. Then correction factors $c(i)$ for each of the channels are obtained as

$$c(i) = N'_c/N_c(i).$$

The values of the calibration factors for each of the channels of the multi-channel memory are stored in a memory-device 20, notably a programmable memory.

When a radiation analysis is performed and a pulse-height distribution is stored in the multi-channel-memory 19, the correction factors stored in the memory-device 20 are employed for supplying a corrected pulse-height distribution to the monitor 31 or to a recording device 32. To that end a read-out control-circuit 21 is provided for reading out successive channels of the multi-channel-memory 19 and reading out a relevant correction factor from the memory-device 20. Therefore, the memory-device 20 with the control-circuit 21 forms means for providing correction numbers. A number of counts read from channel #$i$, say $N_m(i)$ is supplied to a computation means having the form of a multiplication-means 22 together with a corresponding correction factor for the same channel $c(i)$. By the multiplication means a corrected number of counts $N_d(i)$ is computed, viz.

$$N_d(i) = N_m(i) * c(i).$$

Finally, the corrected number of counts form a corrected pulse-height distribution that is supplied to the monitor 31, possibly a monitor of a computer being connected to the radiation analysis apparatus, or the recording device 32. The functions of storage of correction numbers, multiplication and read-out control for which separate devices are shown can also be combined, as shown in box 24, in the functions of a computer being programmed to that end.

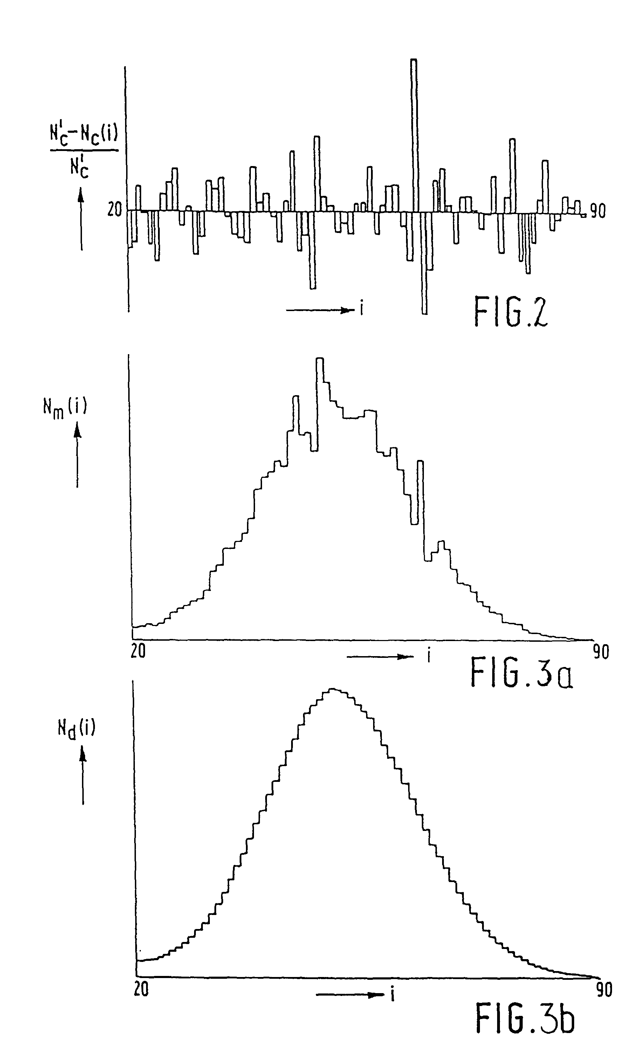

Figure 2 shows differential non-linearities of an analog-to-digital converter for use in a radiation analysis apparatus in accordance with the invention. In particular, for channels #20 to channel #90 the relative deviations from ideal behaviour of the analog-to-digital converter 17 are shown.

Figure 3a shows an example of a pulse-height distribution comprising deviations due to the differential non-linearities of an analog-to-digital converter shown in Figure 2, said pulse-height distribution pertaining to a detector signal having a Gaussian-shaped pulse-height distribution. When a detector signal having a Gaussian-shaped pulse-height distribution is supplied to a detector reading circuit lacking correction means for differential non-linearities of the analog-to-digital converter a distorted pulse-height distribution is obtained. As appears from figure 4a, strong deviations from Gaussian behaviour are present for those channels having strong relative deviations shown in Figure 2.

Figure 3b shows an example of a pulse-height distribution pertaining to the above detector signal from which deviations due to differential non-linearities of an analog-to-digital converter shown in Figure 2 have been removed, as produced by a radiation analysis apparatus according to the invention. As appears from Figure 3b, a detector reading circuit of a radiation analysis apparatus in accordance with the invention produces a correct pulse-height distribution comprising counts being corrected for differential non-linearities of the analog-to-digital converter 17.

## Claims

1. A radiation analysis apparatus for producing a pulse-height distribution generated by the radiation, comprising:

    a radiation detector (6) for generating an analog detector signal in the form of detector pulses,
    an analog-to-digital converter (17) for converting said analog detector signal into a digital signal having signal amplitudes indicative of the heights of the detector pulses, and
    a memory means (19) to store counts representing the pulse-height distribution, provided with individual channels corresponding to different ranges of signal amplitudes of the digital signal, and each time a detector pulse occurs a content of the channel corresponding to the range in which the signal amplitude of the digital signal lies is increased by one incremental unit, thereby generating a stored count for each channel, characterized in that
    the apparatus comprises a correction means (20, 21, 22) to calculate per channel a corrected count on the basis of a correction signal ($c(i)$) having an individual signal amplitude for each channel (i) which is representative of conversion errors of the analog-to-digital converter applicable to the channel.

2. A radiation analysis apparatus as claimed in Claim 1, wherein the correction means comprises multiplication means (22) for multiplying counts per channel by the individual signal amplitude of the correction signal applicable to the channel.

3. A radiation analysis apparatus as claimed in any one of the preceding Claims, wherein the correction means comprises a memory device (21) for storing values of the signal amplitudes of the correction signal.

## Patentansprüche

1. Strahlungsuntersuchungsgerät zum Erzeugen einer von der Strahlung erzeugten Impulshöhenverteilung, mit

    einem Strahlungsdetektor (6) zum Erzeugen eines analogen Detektorsignals in Form von Detektorimpulsen,
    einem Analog/Digital-Wandler (17) zum Umsetzen des analogen Detektorsignals in ein Digitalsignal mit Signalamplituden bezeichnend für die Höhen der Detektorimpulse, und
    einem Speichermittel (19) zum Speichern von Zählungen zur Darstellung der Impulshöhenverteilung, mit individuellen Kanälen entsprechend den verschiedenen Bereichen von Signalamplituden des Digitalsignals, und jeweils beim Auftreten eines Detektorimpulses wird ein Inhalt des Kanals entsprechend dem Bereich, in den die Signalamplitude des digitalen Signals liegt, um eine Inkrementeinheit erhöht, wobei eine gespeicherte Zählung für jenen Kanal erzeugt wird, dadurch gekennzeichnet, dass
    das Gerät ein Korrekturmittel (20, 21, 22) zum kanalweisen Berechnen einer korrigierten Zählung auf Basis eines Korrektursignals (C(i)) mit einer individuellen Signalamplitude für jeden Kanal (i) enthält, die Umwandlungsfehler des Analog/Digital-Wandlers darstellt, die an den Kanal gelegt werden.

2. Strahlungsuntersuchungsgerät nach Anspruch 1, worin das Korrekturmittel Multiplikationsmittel (22) zum Multiplizieren von Zählungen je Kanal durch die individuelle Signalamplitude des Korrektursignals enthält, die an dem Kanal gelegt wird.

3. Strahlungsuntersuchungsgerät nach einem oder mehreren der vorangehenden Ansprüche, worin das Korrekturmittel eine Speicheranordnung (21) zum Speichern von Werten der Signalamplituden des Korrektursignals enthält.

## Revendications

1. Appareil d'analyse à rayonnement destiné à produire une répartition des amplitudes d'impulsion générée par le rayonnement, comprenant :

    un détecteur à rayonnement (6) pour générer un signal de détecteur analogique sous la forme d'impulsions de détecteur;
    un convertisseur analogique-numérique (17) pour convertir ledit signal de détecteur analogique en un signal numérique dont les amplitudes indiquent les amplitudes des impulsions de détecteur; et
    un moyen de mémoire (19) pour mémoriser les comptages représentant la répartition des amplitudes d'impulsion, comportant des canaux distincts correspondant à différents intervalles d'amplitudes du signal numérique, et, à chaque fois qu'une impulsion du détecteur se produit, un contenu du canal correspondant à l'intervalle dans lequel se situe l'amplitude du signal numérique est augmenté d'une unité incrémentielle, générant ainsi un comptage mémorisé pour chaque canal;
    caractérisé en ce que l'appareil comprend un moyen de correction (20, 21, 22) pour calculer un comptage corrigé par canal sur la base d'un signal de correction ($c(i)$) possédant une amplitude de signal distincte pour chaque canal ($i$) qui est représentative des erreurs de conversion du convertisseur analogique-numérique applicables à ce canal.

2. Appareil d'analyse à rayonnement suivant la revendication 1, dans lequel le moyen de correction comporte un moyen de multiplication (22) pour multiplier les comptages par canal par l'amplitude distincte du signal de correction applicable à ce canal.

3. Appareil d'analyse à rayonnement suivant l'une quelconque des revendications précédentes, dans lequel le moyen de correction comprend un dispositif de mémoire (21) pour mémoriser les valeurs des amplitudes du signal de correction.

FIG.1

FIG.2

FIG.3a

FIG.3b